(19) Europäisches Patentamt

European Patent Office

Office européen des brevets

(11) **EP 0 728 156 B1**

(12) **EUROPEAN PATENT SPECIFICATION**

(45) Date of publication and mention
of the grant of the patent:
**15.07.1998 Bulletin 1998/29**

(51) Int Cl.[6]: **C08G 81/02**, C08F 297/04,
C08F 8/04, C08L 53/02

(21) Application number: **95900677.6**

(22) Date of filing: **04.11.1994**

(86) International application number:
**PCT/EP94/03653**

(87) International publication number:
**WO 95/13314 (18.05.1995 Gazette 1995/21)**

(54) **HYDROGENATED ASYMMETRIC RADIAL COPOLYMERS**

HYDRIERTE ASYMMETRISCHE RADIALE COPOLYMERE

COPOLYMERES RADIAUX ASYMETRIQUES HYDROGENES

(84) Designated Contracting States:
**BE DE ES FR GB IT NL**

(30) Priority: **09.11.1993 US 149597**

(43) Date of publication of application:
**28.08.1996 Bulletin 1996/35**

(73) Proprietor: **SHELL INTERNATIONALE
RESEARCH MAATSCHAPPIJ B.V.
2596 HR Den Haag (NL)**

(72) Inventors:
- **CHIN, Steven, Soohyun
  Houston, TX 77095 (US)**
- **HOXMEIER, Ronald, James
  Houston, TX 77082 (US)**
- **SPENCE, Bridget, Ann
  Houston, TX 77098 (US)**
- **HIMES, Glenn, Roy
  Houston, TX 77070 (US)**

(56) References cited:
**EP-A- 0 314 256            EP-A- 0 540 109
US-A- 4 391 949**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

This invention relates to branched polymers. More particularly, this invention relates to asymmetric radial polymers. Heretofore, several methods have been proposed for preparing asymmetric radial polymers. As is well known in the prior art, radial polymers comprise three or more arms extending outwardly from a nucleus. The asymmetric radial polymers, generally, contain arms of at least two different polymers, which polymers may vary as to chemical composition, structure and/or molecular weights. Asymmetric radial polymers having arms of different molecular weights are sometimes referred to as polymodal polymers. A principal difference in the methods frequently used to prepare both asymmetric and polymodal radial polymers resides in the selection of a coupling agent which forms the nucleus of the radial polymer. The coupling agent may contain a fixed, though sometimes variable, number of functional sites such as the coupling agents taught in U.S. Patent Nos. 3,281,383; 3,598,884; 3,639,517; 3,646,161; 3,993,613 and 4,086,298 or the coupling agent may itself be a monomer which polymerizes during the coupling reaction such as taught in U.S. Patent No. 3,985,830.

In general, and when an asymmetric polymer is prepared using one of the methods heretofore proposed, a blend of polymeric arms is first prepared containing the various polymeric arms in the desired ratio and the blend of polymeric arms is then added to the coupling agent or the coupling agent is added to the blend of polymeric arms. These methods do, then, result in the production of a product having, on average, the desired number of each kind of arm in the asymmetric polymer. The real problem associated with producing asymmetric polymers in this fashion, however, is that the product obtained is in actuality a statistical distribution of all possible products which is represented by the equation:

$$Mole\ Fract.\ (SI_1)_{x_i}(I_2)_{y_i} = \left(\frac{[SI_1]}{[SI_1]+[I_2]}\right)^{x_i}\left(\frac{[I_2]}{[SI_1]+[I_2]}\right)^{y_i}\left(\frac{(x_i+y_i)!}{x_i!\,y_i!}\right)$$

for a polymer having the average composition $(SI)_x(I)_y$ where each polymer component is designated as $(SI_1)_{xi}(I_2)_{yi}$ wherein SI represents polystyrene-polyisoprene- copolymer arms and I represents polyisoprene homopolymer arms on the radial polymer, and quantities enclosed in brackets refer to molar concentrations. For example, if one sought to produce an asymmetric radial polymer having two homopolymer arms and two copolymer arms using silicon tetrachloride as the coupling agent by the methods heretofore proposed, a blend of polymeric arms comprising both living homopolymers and living copolymers in a ratio of one to one would be combined with the silicon tetrachloride and the coupling reaction allowed to proceed to completion. The resulting asymmetric polymer would, of course, on average contain two homopolymer arms and two copolymer arms. The actual product obtained would, however, be a blend of radial polymers, some of which contain four homopolymer arms and no copolymer arms, some of which contain three homopolymer arms and one copolymer arm, some of which contain two homopolymer arms and two copolymer arms (the desired product), some of which contain one homopolymer and three copolymer arms, and some of which contain no homopolymer arms and four copolymer arms. The expected statistical distribution for an asymmetric radial copolymer having the average composition $(SI)_2I_2$ made in this manner is given in Table 1. To the extent that an asymmetric radial copolymer containing two homopolymer arms and two copolymer arm was particularly well suited for a particular end use application while radial polymers containing less than two copolymer arms were not particularly well suited (since this type of radial polymer would not form a mechanical network and would thus have very low strength), the blend actually obtained would not, then, perform as well as desired in this particular end use application.

Table 1.

| Calculated Statistical Distribution of Polymer Components for the Asymmetric Radial Polymer Having the Average Composition $(SI)_2I_2$ | |
|---|---|
| **Polymer Component** | **%Mole** |
| $(SI)_4$ | 6.25 |
| $(SI)_3I$ | 25 |
| $(SI)_2I_2$ | 37.5 |
| $(SI)I_3$ | 25 |
| $I_4$ | 6.25 |

Similarly, if one sought to produce an asymmetric radial polymer having three homopolymer arms and three copolymer arms using bis(trichloro)silylethane as the coupling agent by the methods heretofore proposed, the synthetic method would be as described above except that a blend of polymeric arms comprising both living homopolymers and living copolymers in a ratio of one to one would be combined with the bis(trichloro)silylethane. The resulting asymmetric polymer would, of course, on average contain three homopolymer arms and three copolymer arms, but the actual product obtained would have the distribution of components shown in Table 2.

Table 2.

| Calculated Statistical Distribution of Polymer Components for the Asymmetric Radial Polymer Having the Average Composition $(SI)_3I_3$ | |
| --- | --- |
| Polymer Component | %Mole |
| $(SI)_6$ | 1.5625 |
| $(SI)_5I$ | 9.375 |
| $(SI)_4I_2$ | 23.4375 |
| $(SI)_3I_3$ | 32.25 |
| $(SI)_2I_4$ | 23.4375 |
| $(SI)I_5$ | 9.375 |
| $I_6$ | 1.5625 |

Similarly, if one sought to produce an asymmetric radial polymer having four homopolymer arms and two copolymer arms using bis(trichloro)silylethane as the coupling agent by the methods heretofore proposed, the synthetic method would be as described above except that a blend of polymeric arms comprising both living homopolymers and living copolymers in a ratio of four to two would be combined with the bis(trichloro)-silylethane. The resulting asymmetric polymer would, of course, on average contain four homopolymer arms and two copolymer arms, but the actual product obtained would have the distribution of components shown in Table 3.

Table 3.

| Calculated Statistical Distribution of Polymer Components for the Asymmetric Radial Polymer Having the Average Composition $(SI)_2I_4$ | |
| --- | --- |
| Polymer Component | %Mole |
| $(SI)_6$ | .14 |
| $(SI)_5I$ | 1.6 |
| $(SI)_4I_2$ | 8.2 |
| $(SI)_3I_3$ | 22 |
| $(SI)_2I_4$ | 33 |
| $(SI)I_5$ | 26 |
| $I_6$ | 8.8 |

It has been discovered that narrower distributions of relative arm content in any given asymmetric radial polymer frequently does, indeed, lead to better performance in many end use applications. This is particularly important when an asymmetric radial polymer containing a certain arm ratio may give rise to deleterious properties in an application. It has likewise been discovered that the presence of an asymmetric radial polymer composed of a single polymer component of precise architecture frequently does, indeed, lead to better performance in many end use applications. EP-A-0540109 and EP-A-0314256 disclose methods for preparing asymmetric radial polymers containing unsaturated conjugated diene polymer arms.

It has now been discovered that the presence of both saturated and unsaturated arms leads to better performance in certain end use applications.

The present invention therefore relates to an improved asymmetric radial polymer, comprising:

first polymeric arms comprising partially hydrogenated, or unsaturated conjugated diene polymers; and

second polymeric arms, comprising saturated conjugated diene polymer blocks and monoalkenyl aromatic hydrocarbon polymer blocks.

wherein the distribution of the first and second polymeric arms results from sequential contacting of either the first then second or the second then first polymeric arms with a non-polymerizing coupling agent containing from three to twelve functional groups.

The different polymeric arms are contacted sequentially with a non-polymerizing coupling agent. When the number of arms of one polymer is intended to be present in the asymmetric radial polymer product in a greatest number than one or more other polymers, the polymer intended to be present in the greatest number will be contacted with the coupling agent first. It will of course be appreciated that the polymer intended to provide the greatest number of arms in the asymmetric polymer product could be a mixture of different polymers. After reaction of the arms intended to be present in the greater number with the coupling agent is complete or at least substantially complete, the product therefrom will be contacted with the arm intended to be present in the next greatest number and this reaction allowed to proceed until completed or at least substantially completed. When two or more arms are intended to be present in equal number, the order of contacting with the coupling agent is not critical and each of the arms may be added in any order (sequence).

The presence of some saturated polymer arms improves the thermal and environmental stability of the polymer. Unsaturated polymer chains tend to degrade in processing and/or over time. The unsaturation sites are reactive sites which are vulnerable to attack, such as by free radicals created by oxidation, ultraviolet light or mechanical action. As a result, the polymer chain may be severed by chain scission, reducing the molecular weight and those properties which are sensitive to molecular weight. Alternatively, the unsaturation sites may be subjected to grafting and crosslinking reactions which raise the molecular weight and undesirably stiffen the polymer making it unsuitable for applications where softness is important. It is thus most useful to selectively hydrogenate the copolymer arms of the asymmetric radial polymer so that upon exposure to heat, and other degrading conditions the mechanical network of the polymer is retained. The presence of unsaturated polymer arms allows for functionalization and/or crosslinking of the polymer through the olefinic sites.

In general, the method may be used to prepare asymmetric radial polymers with any polymer containing a reactive end group which will react with one or more functional groups contained in a selected coupling agent. The method is particularly suitable for the preparation of asymmetric radial polymers from so-called "living" polymers containing a single terminal metal ion. The coupling agent used in the preparation must, then, contain at least three functional groups which will react with the polymer at the site of the metal ion. As is well known in the prior art, "living" polymers are polymers containing at least one active group such as a metal atom bonded directly to a carbon atom. "Living" polymers are readily prepared via anionic polymerization. Since the present invention is particularly well suited to the preparation of asymmetric radial polymers using "living" polymers to form the arms thereof, the invention will be described by reference to such polymers. It will, however, be appreciated that the invention would be equally useful with polymers having different reactive groups so long as the selected coupling agent contains functional groups which are reactive with the reactive site contained in the polymer.

Living polymers containing a single terminal group are, of course, well known in the prior art. Methods for preparing such polymers are taught, for example, in U.S. Patent Nos. 3,150,209; 3,496,154; 3,498,960; 4,145,298 and 4,238,202. In general, the polymers produced with the processes taught in the foregoing patents may be polymers of one or more conjugated dienes containing from 4 to 12 carbon atoms such as 1,3-butadiene, isoprene, piperylene, methylpentadiene, phenylbutadiene, 3,4-dimethyl-1,3-hexadiene, 4,5-diethyl-1,3-octadiene, preferably those conjugated diolefins containing 4 to 8 carbon atoms. In accordance with the disclosure of at least certain of these patents, one or more of the hydrogen atoms in the conjugated diolefins may be substituted with halogen. The polymers produced by these processes may also be copolymers of one or more of the aforementioned conjugated diolefins and one or more other monomers particularly monoalkenyl aromatic hydrocarbon monomers such as styrene, various alkyl-substituted styrenes, alkoxy-substituted styrenes, vinyl naphthalene, vinyl toluene and the like. Homopolymers and copolymers of monoalkenyl aromatic hydrocarbons can also be prepared by the methods taught in the aforementioned patents, particularly the methods taught in U.S. Patent Nos. 3,150,209; 3,496,154; 3,498,960; 4,145,298 and 4,238,202. When the polymer product is a random or tapered copolymer, the monomers are, generally, added at the same time, although the faster reacting monomer may be added slowly in some cases, while, when the product is a block copolymer, the monomer used to form the separate blocks are added sequentially.

In general, the polymers useful as arms in the asymmetric radial polymer of this invention may be prepared by contacting the monomer or monomers with an organoalkali metal compound in a suitable solvent at a temperature within the range from -150°C to 300°C, preferably at a temperature within the range from 0°C to 100°C. Particularly effective polymerization initiators are organolithium compounds having the general formula:

$$RLi$$

Wherein:

R is an aliphatic, cycloaliphatic, alkyl-substituted cycloaliphatic, aromatic or alkyl-substituted aromatic hydrocarbon radical having from 1 to 20 carbon atoms.

and preferably tert-butyl or sec-butyl

In general, the polymers useful as arms in the asymmetric radial polymer of this invention will have a weight-average molecular weight within the range from 1000 to 500,000 and when the polymer is a copolymer of one or more conjugated diolefins and one or more other monomers, the copolymer will comprise from 1 wt% to 99 wt% monomeric diolefin units and from 99 wt% to 1 wt% monoalkenyl aromatic hydrocarbon monomer units. In general, the different polymer arms will be prepared separately and maintained separately until each is sequentially contacted with the coupling agent.

In general, any of the non-polymerizing coupling agents known in the prior art to be useful in forming a radial polymer by contacting the same with a living polymer may be used in both the method of this invention and the asymmetric radial polymers of this invention. In general, suitable coupling agents will contain three or more functional groups which will react with the living polymer at the metal-carbon bond. This method allows for precise synthesis of asymmetric radial polymers containing saturated conjugated dienes or mixtures of saturated and unsaturated conjugated dienes when the coupling agent and polymer arm ratios are suitably chosen.

Suitable coupling agents have from three to about twelve functional groups, including $SiX_4$, $RSiX_3$, $HSiX_3$, $RX_2Si-(CH_2)_x$ $-SiX_2R$, $X_3Si-SiX_3$, $X_3Si-O-SiX$, $X_3Si-(CH_2)_x-SiX_3$, $RX_2Si-CH_2)_x-SiX_2-(CH_2)_x-SiX_2R$, $R-C(SiX_3)_3$, $R-C(CH_2SiX_3)_3$, $C(CH_2SiX_3)_4$ and the like, particularly those containing from three to about six functional groups. In the foregoing formulae: each X may, independently, be fluorine, chlorine, bromine, iodine, alkoxide radicals, carboxylate radicals, hydride; R is a hydrocarbyl radical having from 1 to 10 carbon atoms, preferably from 1 to 6 carbon atoms; and x is a whole number from 1 to 6. Particularly useful coupling agents include the silicon tetrahalides such as silicon tetrafluoride, silicon tetrachloride, silicon tetrabromide and the like, and the bis(trihalo)silanes such as bis(trichlorosilyl) ethane, and hexahalodisiloxanes such as hexachlorodisiloxane, wherein the halogen groups may be fluorine, chlorine, bromine, or iodine, preferably chlorine.

In general, the living polymers used as arms in the asymmetric radial polymer will be contacted with the coupling agent at a temperature within the range from 0°C to 100°C at a pressure within the range from 1 bar (0 psig) to 8 bar (100 psig) and the contacting in each step will be maintained until reaction between the arms and the coupling agent is complete or at least substantially complete, generally for a period of time within the range from 1 to 180 minutes.

While the inventors do not wish to be bound by any particular theory, it is believed that the method of this invention results in a precisely controlled arm distribution because the reactivity of the functional groups contained in the coupling agent become progressively less active as the number of functional groups contained in the coupling agent is reduced as the result of reaction with the metal-carbon bond contained in the living polymer. Further, it is believed that this reduction in activity is caused primarily by steric hindrance resulting from the progressive incorporation of polymer segments onto the coupling agent. The last functional site remaining on the coupling agent would, then, be the least reactive no matter how many functional groups the coupling agent initially contained.

When the stoichiometry of the first polymeric arms to be added relative to the coupling agent is such that there is enough polymer arms to react with all but one functional group on each silicon atom, then a polymeric intermediate with a precise structure is formed. When the second portion of arms is contacted with the partially reacted coupling agent, the second arms will react with the remaining functional groups (one on each silicon atom) giving a precise asymmetric radial polymer. This difference in reactivity, then, when coupled with sequential addition of the different arms in controlled stoichiometric amounts ensures that each asymmetric radial polymer formed will have the desired number of each arm.

When the stoichiometry of the first polymer arms to be added relative to the coupling agent is such that there are less than enough polymer arms than that required to react with all but one functional group on each Silicon atom of the coupling agent (but more than one polymer arm per Silicon), then a distribution of partially coupled polymeric products will be obtained. However, since the last functional group is slower to react, as discussed above, there will not be any coupling agent molecules that have all of their sites reacted with polymer forming a symmetric radial polymer containing only arms of the first polymer type.

In addition, since polymer chain ends are very reactive towards the functional groups on the Silicon atoms of the coupling agent, there will not be any Silicon that do not have at least one polymeric arm. When the next portion of polymeric arms is contacted with the partially reacted coupling agent, they will react with the remaining functional groups giving an asymmetric radial polymer distribution which is significantly narrower than that obtained by the prior art methods and which will not contain any non-asymmetric radial polymer composed only of one polymeric arm type. This would be the synthetic method used when an asymmetric radial polymer is desired such that a precisely controlled ratio of differing polymer arms is not critical to the performance of the polymer, but a narrower distribution (containing significantly more of the desired asymmetric radial polymer without the presence of non-asymmetric radial polymers) than is available using the prior art methods is desired for improved performance in the application is needed.

In addition, the method allows for the use of more economical, commercially available coupling agents. For example, a precise asymmetric radial polymer containing two copolymer arms and two homopolymer arms may be synthesized using the first described method if the coupling agent $RCl_2Si(CH_2)_2SiCl_2R$ is used. However, $SiCl_4$ may be used in the second described method to produce an asymmetric radial polymer having on average two copolymer arms and two homopolymer arms. In this case, the product will, in actuality, be a mixture of asymmetric radial polymers, some having three copolymer arms and one homopolymer arm, the majority having two copolymer arms and two homopolymer arms, and some having one copolymer arm and three homopolymer arms. Unlike the product obtained using the prior art methods, the product will not contain symmetric radial polymers containing four copolymer arms and no homopolymer arms, or four homopolymer arms and no copolymer arms.

Similarly, precise six-arm asymmetric radial polymers containing three copolymer arms and three homopolymer arms without other six-arm polymeric components, can be prepared using $RCl_2Si(CH_2)_2SiCl_2(CH_2)_2SiCl_2R$ as the coupling agent using the first method described. $Cl_3Si-(CH_2)_2-SiCl_3$ May be used as the coupling agent in the second described method to produce an asymmetric radial polymer having on average three copolymer arms and three homopolymer arms. If the block copolymer arms are added first, e.g., then the product will, in actuality, be a mixture of asymmetric radial polymers, some having four copolymer arms and two homopolymer arms, the majority having three copolymer arms and three homopolymer arms, some having two copolymer arms and four homopolymer arms, and some having one copolymer arm and five homopolymer arms.

Unlike the product obtained using the prior art methods, the product of this invention will not contain symmetric radial polymers containing six copolymer arms and no homopolymer arms, or six homopolymer arms and no copolymer arms. In addition, the product will not contain radial polymers containing five copolymer arms and one homopolymer arm because this product could only result from reaction of two Cl functional groups at one Si site and reaction of all three Cl functional groups at the other Si site. Since the last Cl group on each Si is much slower to react, this product will not be formed. However, if $Cl_3Si-(CH_2)_2-SiCl_3$ is used as the coupling agent and the first described method is used with the stoichiometry discussed above, a precise six arm asymmetric radial polymer having four of the first type of polymer arm and two of the second type of polymer arm will be produced without the presence of other six arm radial polymeric components.

For applications that can tolerate a distribution of products but cannot tolerate the presence of symmetric radial polymers containing all copolymer arms and no homopolymer arms and symmetric radial polymers containing all homopolymer arms and no copolymer arms the method of this invention provides a simple, economical method to obtain significantly higher amounts of the desired product while avoiding the presence of undesired radial polymers.

In contrast, when all of the polymer arms are combined and contacted simultaneously with the coupling agent, on the other hand, the distribution of the different arms on each of the asymmetric radial polymers formed will be statistical and can range from polymers having all arms of one type of polymer to all arms of another type of polymer as shown in Tables 1, 2 and 3.

In general, the polymers useful as arms in the asymmetric radial polymers of this invention will be in solution when contacted with the coupling agent. Suitable solvents include those useful in the solution polymerization of the polymer and include aliphatic, cycloaliphatic, alkyl-substituted cycloaliphatic, aromatic and alkyl-substituted aromatic hydrocarbons, ethers and mixtures thereof. Suitable solvents, then, include aliphatic hydrocarbons such as butane, pentane, hexane, heptane, cycloaliphatic hydrocarbons such as cylohexane or cycloheptane, alkyl-substituted cycloaliphatic hydrocarbons such as methylcyclohexane methylcycloheptane, aromatic hydrocarbons such as benzene and alkyl-substituted aromatic hydrocarbons such as toluene or xylene and ethers such as tetrahydrofuran, diethylether or di-n-butyl ether. Since the polymers useful in making the asymmetric radial polymers of this invention will contain a single terminal reactive group, the polymers used in preparation of the asymmetric radial polymers will be retained in solution after preparation without deactivating the reactive (living) site. In general, the coupling agent may be added to a solution of the polymer or a solution of the polymer may be added to the coupling agent.

The method of preparing the asymmetric radial polymers of this invention will comprise a plurality of steps. In the first step, a polymer containing a single terminal reactive group will be contacted with a coupling agent containing a plurality of functional groups which are reactive with the terminal group of the polymer. In a second step, the reaction product from the first step will be combined with a solution of a second polymer which is different from the polymer used in the first step. The difference may be in chemical composition, relative chemical composition, structure, molecular weight or the like. In the second step, contacting between the second polymer and the reaction product from the first step will be continued until reaction between the second polymer and the remaining functional groups of the coupling agent is complete or at least substantially complete. In all except the last step of the preparation, it will be important to control the amount of polymer contacted with the coupling agent such that, on average, the desired number of such arms are incorporated into the nucleus of each of the asymmetric radial polymers actually formed. In the final step, careful control of the amount of polymer used is not as important so long as a sufficient amount of polymer to react with all of the remaining functional groups in the coupling agent is used. To the extent that the polymer used is not readily separable from the asymmetric radial polymer, however, and to the extent that the presence of such a polymer in the final product is undesirable, care should be exercised to ensure that a stoichiometric amount of the last polymer, relative to the remaining functional groups, is used.

The asymmetric polymer is hydrogenated in a selective manner with a suitable catalyst and conditions (like those in Re 27,145, U.S. Patent 4,001,199, U.S. Patent 5,001,199, or with a titanium catalyst such as is disclosed in U.S. Patent 5,039,755, or by fixed bed hydrogenation) that hydrogenate all or some of the olefinic double bonds. For partial hydrogenation, the rate of hydrogenation decreases as follows: monosubstituted > disubstituted > vinylidene or trisubstituted > tetrasubstituted olefinic double bonds.

The asymmetric radial polymers of this invention may be designed for use in any of the applications for which asymmetric radial polymers having the same average relative arm structure can be used. Suitable end use applications, then, include impact modification of engineering thermoplastics, impact modification of unsaturated thermosetting polyesters, asphalt modification, viscosity index improvers and adhesives.

In a first preferred embodiment of the present invention, the process of this invention is used to prepare an asymmetric radial polymer having four arms. The arms are, partly, polymers containing only unsaturated conjugated diolefins, most preferably isoprene homopolymer arms and, partly, block copolymers containing at least one monoalkenyl aromatic hydrocarbon polymer block and at least one saturated conjugated diolefin polymer block. In a most preferred embodiment, the block copolymer arms comprise a single polystyrene block and a single saturated polybutadiene block. The weight-average molecular weight of those polymeric arms containing only polymerized unsaturated conjugated diolefins will be within the range from 1,000 to 150,000. The weight-average molecular weight of the monoalkenyl aromatic hydrocarbon polymer blocks will be within the range from 5,000 to 100,000 and the weight-average molecular weight of the saturated conjugated diolefin polymer blocks will be within the range from 10,000 to 150,000. Both the conjugated diolefin polymer arms and the block copolymer arms will be living polymers containing a single lithium atom bonded to a terminal carbon atom. In this preferred embodiment, any of the silicon coupling agents containing four functional groups which are reactive with the lithium-carbon bond may be used.

In a most preferred embodiment, the coupling agent is silicon tetrachloride and the ratio of isoprene homopolymer arms to the styrene-hydrogenated butadiene block copolymer arms is 2:2.

In the first preferred embodiment, the polymer intended to constitute the first set of arms is contacted with the coupling agent first and the reaction between the lithium-carbon bond and the functional groups allowed to proceed to completion. When the polymer is intended to contain two of both kinds of arms, either polymer may be contacted with the coupling agent first. In the preferred embodiment, the sequential coupling reactions is completed at a temperature within the range from 50°C to 80°C, at a pressure within the range from about a bar (0 psig) to about 3 bar (30 psig) with a nominal holding time within the range from 20 to 100 minutes. Ethers such as glyme, diethylether, dimethoxybenzene, or tetramethylene ethylenediamine are added before the second coupling step to accelerate the reaction between the last halogen on each silicon atom and the terminal functional group on the second polymeric arms. Stoichiometric quantities of all reactants are used in each step.

In a second preferred embodiment of the present invention, the process of this invention is used to prepare an asymmetric radial polymer having six arms. The arms are, partly, polymers containing only unsaturated conjugated diolefins, most preferably isoprene homopolymer arms, and, partly, block copolymers containing at least one monoalkenyl aromatic hydrocarbon polymer block and at least one saturated conjugated diolefin polymer block. In a most preferred embodiment, the block copolymer arms comprise a single polystyrene block and a single saturated polybutadiene block. The weight-average molecular weight of those polymeric arms containing only polymerized unsaturated conjugated diolefins will be within the range from 1,000 to 150,000. The weight-average molecular weight of the monoalkenyl aromatic hydrocarbon polymer blocks will be within the range from 5,000 to 100,000 and the weight-average molecular weight of the saturated conjugated diolefin polymer blocks will be within the range from 10,000 to 150,000. Both the conjugated diolefin polymer arms and the block copolymer arms will be living polymers containing a single lithium atom bonded to a terminal carbon atom.

In the second preferred embodiment, any of the silicon coupling agents containing six functional groups which are reactive with the lithium-carbon bond may be used. In a most preferred embodiment, the coupling agent is bis(trichlorosilyl)ethane and the ratio of isoprene homopolymer arms to the styrene-hydrogenated butadiene block copolymer arms is 4:2.

In the second preferred embodiment, the polymer intended to constitute the first set of four arms is contacted with the coupling agent first and the reaction between the lithium-carbon bond and the functional groups allowed to proceed to completion. When the polymer is intended to contain three of both kinds of arms, either polymer may be contacted with the coupling agent first. In the second preferred embodiment, the sequential coupling reaction is completed at a temperature within the range from 50°C to 80°C, at a pressure within the range from 1 bar (0 psig) to 3 bar (30 psig) with a nominal holding time within the range from 20 to 100 minutes. Ethers such as glyme, diethylether, dimethoxybenzene, or tetramethylene ethylenediamine are added before the second coupling step to accelerate the reaction between the last halogen on each silicon atom and the terminal functional group on the second polymeric arms. Stoichiometric quantities of all reactants are used in each step.

The invention is illustrated by the following examples, however, that the examples are presented solely for the purposes of illustration and should not be construed as limiting the invention.

Example 1

In this example, an asymmetric radial polymer within the scope of the present invention containing two isoprene homopolymer arms and two styrene-hydrogenated butadiene block copolymer arms was prepared. The polyisoprene arms had a weight-average molecular weight of 18,000. The block copolymer arms had a polystyrene block weight-average molecular weight of 10,400 and a saturated polybutadiene block weight-average molecular weight of 24,000. In the first step of the preparation, a sufficient amount of a living isoprene homopolymer to provide two moles of living polymer per mole of silicon tetrachloride was contacted with silicon tetrachloride at a temperature of 60°C and at ambient pressure. The living polymer was dissolved in cyclohexane at a concentration of 20 wt% of polyisoprene and the contacting was accomplished by adding the silicon tetrachloride to the polymer solution. The contacting was maintained for 60 minutes with mild agitation. Separately, a styrene-butadiene block polymer was synthesized in the presence of 6% diethylether (on a total solution basis) which resulted in a butadiene block containing 41% 1,2-polymerized butadiene by $^1$H NMR analysis. After reaction of the living isoprene homopolymer and the silicon tetrachloride was complete, 300 ppm glyme (on a total solution basis) and a sufficient amount of the living styrene-saturated butadiene block copolymer were added to the solution to provide two moles of block copolymer per mole of silicon tetrachloride initially in solution. Contacting between the block copolymer and the reaction product from the first step was continued for 60 minutes at the same conditions used during the first contacting step. After reaction of the block copolymer and the coupling agent was completed, the asymmetric radial polymer was recovered.

The asymmetric radial polymer was partially hydrogenated using a nickel-aluminum catalyst under conditions that do not hydrogenate aromatic double bonds and will preferentially hydrogenate polybutadiene double bonds rather than polyisoprene double bonds. The catalyst was washed out. The hydrogenation catalyst was made by the reaction of nickel 2-ethylhexanoate and triethylaluminum (Al/Ni ratio was about 2.3/l) and was used at 10 ppm nickel on a total solution basis, at a pressure of 48 bar (700 psi) and a temperature of 80°C.

After selective hydrogenation, the polymer was analyzed by $^1$H NMR to determine the amount of saturation and unsaturation in both the polyisoprene and polybutadiene blocks. These results are also reported in Table 4, along with the results obtained on the polymer before selective hydrogenation.

Table 4.

| Analysis of Selectively Hydrogenated Asymmetric Radial Polymers[a] | | | | |
|---|---|---|---|---|
| Ex. No. | %weight Isoprene before selective hydrogenation | weight Isoprene after selective hydrogenation | %weight butadiene before selective hydrogenation | %weight butadiene after selective hydrogenation |
| 1 | 39.67 | 32.84 | 42.15 | 5.73 |
| 2 | 41.52 | 31.72 | 44.56 | 4.41 |
| 3 | 41.29 | 32.2 | 44.66 | 2.76 |
| 4 | 25.41 | 14.15 | 57.83 | 5.15 |

a. Determined by $^1$H NMR analysis.

Example 2

In this example, an asymmetric radial polymer within the scope of the present invention containing , on average, two isoprene homopolymer arms and two styrene-saturated butadiene block copolymer arms was prepared according to the procedure of Example 1 with the following changes. The polyisoprene arms had a weight-average molecular weight of 18,400. The styrene-butadiene block copolymer arms had a polystyrene block weight-average molecular weight of 5,500 and a saturated polybutadiene block weight-average molecular weight of 19,400. In the first coupling step, the living polyisoprene was contacted with the silicon tetrachloride at 25°C for 60 minutes. The second coupling step was conducted at 70C for 60 minutes in the presence of 300 ppm glyme on a total solution basis After reaction of the block polymer and the coupling agent was complete, the asymmetric radial polymer was recovered. The 1,2-butadiene content of the resulting polymer was 40% as determined by $^1$H NMR.

The asymmetric radial polymer was partially hydrogenated according to the procedure of Example 1 with the following changes. The catalyst was used at 20 ppm nickel on a total solution basis at a temperature of 90C.

After selective hydrogenation, the polymer was analyzed by $^1$H NMR to determine the amount of saturation and unsaturation in both the polyisoprene and polybutadiene blocks. These results are also reported in Table 4, along with the results obtained on the polymer before selective hydrogenation.

Example 3

In this example, an asymmetric radial polymer within the scope of the present invention containing two isoprene homopolymer arms and two styrene-saturated butadiene block copolymer arms was prepared according to the procedure of Example 1 with the following changes. The polyisoprene arms had a weight-average molecular weight of 19,600. The styrene-saturated butadiene block copolymer arms had a polystyrene block weight-average molecular weight of 5,800 and a saturated polybutadiene block weight-average molecular weight of 21,500. The second coupling step was conducted at 70C for 60 minutes. After reaction of the block polymer and the coupling agent was complete, the asymmetric radial polymer was recovered and analyzed. The 1,2-butadiene content of the resulting polymer was 40% as determined by $^1$H NMR analysis.

The asymmetric radial polymer was partially hydrogenated according to the procedure of Example 1 with the following change. The hydrogenation was carried out at about 100C.

After selective hydrogenation, the polymer was analyzed by $^1$H NMR to determine the amount of saturation and unsaturation in both the polyisoprene and polybutadiene blocks. These results are also reported in Table 4, along with the results obtained on the polymer before selective hydrogenation.

For examples 1, 2, and 3, above, after reaction of the living isoprene homopolymer and the silicon tetrachloride was complete, an aliquot of the solution was removed and analyzed by Gel Permeation Chromatography to determine the relative amounts of coupling agent containing one, two and three polymer arms. This analysis allows prediction of the final polymer composition after the second coupling step is completed and in some cases is the only available method of determination since, depending upon the relative polymer arm weight average molecular weights, Gel Permeation Chromatography does not allow resolution of the various polymer components of the final product. The results of this analysis establish that the method of this invention is successful in producing a significantly narrower distribution of polymer products by complete elimination of symmetric radial polymers (those containing four homopolymer arms and no block copolymer arms or four block copolymer arms and no homopolymer arms). The prior art methods would result in a product containing 40%wt of these non-asymmetric radial polymers, and only 20% of the desired asymmetric radial polymer containing two homopolymer arms and two block copolymer arms. The method of this invention is, then, very effective in narrowing the distribution of arms in the asymmetric radial polymer produced.

Table 5.

| $(SEB)_2I_4$ Asymmetric Radial Polymer Composition[a] | | | |
|---|---|---|---|
| Example No. | $\%(SEB)_2I_4$ | $\%(SEB)I_4$ | $\%SEB$[b] |
| 4 | 78 | 22 | not resolved |

a. Determined by Gel Permeation Chromatography. Values reported are %weight of total composition as determined by R.I. detection.

b. Uncoupled block copolymer arm.

Example 4

In this example, an asymmetric radial polymer within the scope of the present invention containing four isoprene homopolymer arms and two styrene-saturated butadiene block copolymers arms was prepared according to the following procedure. In the first step of the preparation, a sufficient amount of living isoprene homopolymer to provide four moles of living polymer per mole of bis(trichloro)silylethane was contacted with the at a temperature of 65°C and at ambient pressure. The living polymer was dissolved in cyclohexane at a concentration of 15 wt% of polyisoprene and the contacting was accomplished by adding the bis(trichloro)silylethane to the polymer solution. The contacting was maintained for 60 minutes with mild agitation. After reaction of the living isoprene homopolymer and the bis(trichloro)silyl-ethane was complete, about 300 ppm of glyme on a total solution basis was added to the solution followed by a sufficient amount of a living styrene-butadiene block polymer to provide two moles of block polymer per mole of bis(trichloro)silylethane initially in solution. The polyisoprene arms had a weight average molecular weight of 3,800. The styrene-saturated butadiene block copolymer arms had a polystyrene block weight average molecular weight of 6,000 and a saturated polybutadiene block weight average molecular weight of 23,400. The styrene-butadiene block copolymer was made in the presence of 300 ppm orthodimethoxybenzene (on a total solution basis), giving a 1,2-butadiene content of 54.1% by $^1$H NMR analysis. A sufficient amount of the living styrene-butadiene block polymer to provide two moles of block polymer per mole of bis(trichloro)silylethane initially in solution was contacted with the reaction product from the first step for 60 minutes at 65C.

After reaction of the block polymer and the coupling agent was completed, the asymmetric radial polymer was recovered and analyzed to determine the polymer composition. The results obtained are summarized in Table 5.

The asymmetric radial polymer was partially hydrogenated according to the procedure of Example 1 with the following changes. The catalyst was used at 50 ppm nickel on a total solution basis at a temperature of about 90C and a pressure of 600 psi.

After selective hydrogenation, the polymer was analyzed by $^1$H NMR to determine the amount of saturation and unsaturation in both the polyisoprene and polybutadiene blocks. These results are also reported in Table 4, along with the results obtained for the polymer before selective hydrogenation.

As will be apparent from the data summarized in Table 5, the method of this invention results in a polymer composition containing almost exclusively the desired six-arm asymmetric radial polymer. No other six-arm asymmetric radial polymers are produced. Preparation of a similar polymer by the prior art method should result in a distribution of six-arm asymmetric radial polymer components as given in Table 3, containing less than 33% of the desired asymmetric radial copolymer. The method of the present invention is, then, very effective in producing a precisely controlled asymmetric radial polymer.

As will be apparent from the data summarized in Table 4, the method of this invention is successful in obtaining asymmetric radial polymers containing both saturated and unsaturated polymer arms. $^1$H NMR analysis shows that at least 86% and up to 94% of the butadiene double bonds are hydrogenated leaving up to 83% of the isoprene double bonds unsaturated. Thus,the butadiene units are hydrogenated in preference to isoprene units resulting in a polymer containing arms in which the butadiene of styrene-butadiene arms are predominately hydrogenated and arms in which the isoprene arms remain predominantly unsaturated.

## Claims

1. An asymmetric radial polymer, comprising:

    first polymeric arms comprising partially hydrogenated, or unsaturated conjugated diene polymers; and
    second polymeric arms, comprising saturated conjugated diene polymer blocks and monoalkenyl aromatic hydrocarbon polymer blocks.
    wherein the distribution of the first and second polymeric arms results from sequential contacting of either the first then second or the second then first polymeric arms with a non-polymerizing coupling agent containing from three to twelve functional groups.

2. The asymmetric radial polymer of claim 1 wherein the first polymeric arms comprise partially hydrogenated or unsaturated isoprene polymers.

3. The asymmetric radial polymer of claims 1 or 2 wherein the second polymeric arms comprise saturated butadiene polymer blocks and styrene polymer blocks.

4. The asymmetric radial polymer of Claim 1 - 3 wherein the radial polymer contains four or six polymeric arms.

5. The asymmetric radial polymer of claims 1 - 4
    wherein the distribution of the first and second polymeric arms results from sequential contacting of the first then second polymeric arms with a non-polymerizing coupling agent containing from four to six functional groups.

6. The asymmetric radial polymer of claims 1 to 5 wherein said second polymeric arms comprise 2 arms in the asymmetric radial polymer.

7. The asymmetric radial polymers of claims 1 to 6, wherein the coupling agent is silicon tetrachloride or bis(trichlorosilyl)ethane.

## Patentansprüche

1. Asymmetrisches radiales Polymer, umfassend:

erste Polymerarme mit einem Gehalt an partiell hydrierten oder ungesättigten konjugierten Dienpolymeren; und

zweite Polymerarme mit einem Gehalt an gesättigten konjugierten Dienpolymerblöcken und monoalkenylaromatischen Kohlenwasserstoffpolymerblöcken,

worin die Verteilung der ersten und zweiten Polymerarme aus dem sequentiellen Inberührungbringen von entweder den ersten und dann den zweiten oder den zweiten und dann den ersten Polymerarmen mit einem nichtpolymerisierenden Kupplungsmittel resultiert, das drei bis zwölf funktionelle Gruppen enthält.

2. Asymmetrisches radiales Polymer nach Anspruch 1, worin die ersten Polymerarme partiell hydrierte oder ungesättigte Isoprenpolymere umfassen.

3. Asymmetrisches radiales Polymer nach Anspruch 1 oder 2, worin die zweiten Polymerarme gesättigte Butadienpolymerblöcke und Styrolpolymerblöcke umfassen.

4. Asymmetrisches radiales Polymer nach den Ansprüchen 1 bis 3, worin das radiale Polymer vier oder sechs Polymerarme enthält.

5. Asymmetrisches radiales Polymer nach den Ansprüchen 1 bis 4, worin die Verteilung der ersten und der zweiten Polymerarme aus dem sequentiellen Kontaktieren der ersten und dann der zweiten Polymerarme mit einem nichtpolymerisierenden Kupplungsmittel resultiert, das vier bis sechs funktionelle Gruppen enthält.

6. Asymmetrisches radiales Polymer nach den Ansprüchen 1 bis 5, worin die zweiten Polymerarme zwei Arme in dem asymmetrischen radialen Polymer ausmachen.

7. Asymmetrische radiale Polymere nach den Ansprüchen 1 bis 6, worin das Kupplungsmittel Siliziumtetrachlorid oder Bis (trichlorsilyl)ethan ist.

**Revendications**

1. Polymère radial asymétrique amélioré, qui comprend :

des premiers bras polymériques comprenant des polymères de diènes conjugués partiellement hydrogénés ou insaturés, et

des seconds bras polymériques comprenant des séquences de polymères de diènes conjugués saturés et des séquences de polymères d'hydrocarbures monoalcényle aromatiques,

où la distribution des premiers et des seconds bras polymériques résulte de la mise en contact séquentielle de chacun des premiers, puis des seconds ou des seconds, puis des premiers bras polymériques, avec un agent de couplage non polymérisant contenant de trois à douze radicaux fonctionnels.

2. Polymère radial asymétrique suivant la revendication 1, caractérisé en ce que les premiers bras de polymère comprennent des polymères d'isoprène partiellement hydrogénés ou insaturés.

3. Polymère radial asymétrique suivant la revendication 1 ou 2, caractérisé en ce que les seconds bras de polymère comprennent des séquences de polymère de butadiène saturé et des séquences de polymère de styrène.

4. Polymère radial asymétrique suivant l'une quelconque des revendications 1 à 3, caractérisé en ce que le polymère radial contient quatre ou six bras de polymère.

5. Polymère radial asymétrique suivant l'une quelconque des revendications 1 à 4, caractérisé en ce que la distribution des premiers et des seconds bras de polymère provient de la mise en contact séquentielle des premiers et ensuite des seconds bras de polymère avec un agent de couplage non polymérisant contenant quatre à six radicaux fonctionnels.

6. Polymère radial asymétrique suivant l'une quelconque des revendications 1 à 5, caractérisé en ce que lesdits seconds bras de polymère comprennent deux bras dans le polymère radial asymétrique.

7. Polymères radiaux asymétriques suivant l'une quelconque des revendications 1 à 6, caractérisés en ce que l'agent de couplage est le tétrachlorure de silicium ou le bis(trichlorosilyl)éthane.